# EUROPEAN PATENT SPECIFICATION

(11) **EP 2 646 309 B1**
(45) Date of publication and mention of the grant of the patent: **20.12.2017**
(21) Application number: 11850314.3
(22) Date of filing: 04.11.2011
(51) Int. Cl.: B62B 15/00, B62B 13/04, B62B 17/04, B62B 17/06

(54) **CHASSIS FOR A SLEDGE**
FAHRGESTELL FÜR EINEN SCHLITTEN
CHÂSSIS POUR TRAÎNEAU

(30) Priority: 30.11.2010 NO 20101677
(43) Date of publication of application: 09.10.2013
(73) Proprietor: Snowsnake as, 7653 Verdal (NO)
(72) Inventor: BJÖRGVIK, Karl Johan, N-7660 Vuku (NO)
(74) Representative: Acapo AS
(86) International application number: PCT/NO2011/000311
(87) International publication number: WO 2012/087147

(56) References cited:
- FI-B- 94 850
- FI-B- 94 850
- FR-A1- 2 687 113
- FR-A1- 2 883 243
- NO-A- 853 484
- NO-A- 853 484
- SE-B- 390 149
- SE-B- 454 261
- SE-B- 457 870
- SE-L- 9 604 497
- US-A- 3 061 326
- US-A- 3 803 653

## Description

The present invention is related to a chassis for a sledge according to the preamble of patent claim 1.

Document FI 94850 B shows such a chassis.

### Background

Snowmobiles are used for a number of purposes today, both personal and in business. In different situations it is necessary and/or desirable to bring equipment and goods, and it is an advantage to load these onto a sledge suspended behind the snowmobile. Many snowmobile sledges are also designed to transport persons. Norsk Maskinutvikling manufactures a sledge for goods, while Altapulken is an example of a sledge designed to transport persons.

The snowmobile sledges of today often have stability problems, and do not always follow in the snowmobile tracks. In order to improve the stability, the sledges are often provided with two skis, and the distance between the skis may be different from the distance between the skis of the snowmobile. Thus, the sledge must make its own tracks on the ground, and the fuel consumption will increase substantially. The distance between the skis of known snowmobile sledges renders the sledge broad, and many of the sledges of today are relatively heavy. Transportation of sledge and snowmobile is thus a challenge, both due to weight, but also because the sledge is so wide and tall that the sledge and snowmobile do not fit on a car trailer at the same time.

Another problem with the snowmobile sledges of today is that the track belt of the snowmobile spins snow and possible water in such a way that the sledge and goods becomes wet and/or covered with ice. The sledge also becomes heavier and more difficult to handle. It is a well-known problem that sledges with a cargo box can be covered with ice in such a way that the box can not be opened after the ride.

A conventional sledge is suspended behind the snowmobile and is only controlled vertically to a certain degree by the movements of the snowmobile. The sledge will thus easily tip over or get stuck if one is driving in rough landscape. The roughness of the landscape may also give an uneven pull and tugs in the sledge. There are many different attempts to solve this, among others different methods for coupling the sledge to the snowmobile. There are however, no solutions providing a sledge which follows the snowmobile both horizontally and vertically, and offers good driving comfort to both the driver and to possible passengers on the sledge.

### Object

The main object of the present invention is to provide a sledge which is able to follow the movements of the vehicle, and which stays in the tracks of the vehicle. According to another object the sledge should be designed in such a way that it and/or the goods on the sledge will not be covered with ice when the sledge is being used. Yet another object is that the fuel consumption should be lower when driving with a sledge according to the present invention, compared to driving with regular sledges. Finally the sledge should have low weight when unloaded, and be narrower than conventional sledges, for instance in such a way that the sledge and the snowmobile easily can be transported on a car trailer together.

### The invention

The object is met with a chassis for a sledge according to the characterizing part of patent claim 1. Advantageous features are stated in the dependent claims.

The present invention is related to a chassis for a sledge, preferably a snowmobile sledge, wherein the chassis comprises an upper part and a lower part. The lower part comprises ski or the like, and the upper part comprises a coupling device for coupling to a snowmobile, and a support for fastening a cargo box, platform for goods and/or passengers, passenger-coupe and the similar. The upper and lower parts are attached to each other at the front by a pivotal and slidable connection and by a pivotal connection at the rear part either directly or with spacers. By "the front" it is meant the part of the chassis being closest to the snowmobile when driving.

The lower part of the chassis comprises one ski, and may in the simplest embodiment comprise only ski and devices for attachment to the upper part. The upper part comprises support for the carrier surface of the chassis, and may in its simplest embodiment comprise a pole extending the whole length of the chassis. It is, however, preferred that the upper part also comprises at the least one pole crossing the longitudinal pole, in such a way that the carrier surface is supported both longitudinally and laterally. The crossing poles may advantageously be removable in such a way that they can be attached when needed. The upper part comprises further devices for attachment to the lower part in the front part and in the middle or rear part, and coupling device for coupling to the snowmobile. The coupling device may for instance be in an elongation of the longitudinal pole. The lower part is laterally centred under the upper part, but may protrude further back and/or forward than the support for the carrier surface on the upper part.

The attachment between the upper- and lower parts at the rear end may be performed in a known way, wherein spacers in pairs of two are attached at a distance from each other to the upper part, and to the lower part in one common place, in such a way that one pair of spacers are shaped as a V between the upper and lower part. However, in a preferred embodiment of the invention one or more spacers are being attached symmetrically about the longitudinal axis, between the upper- and lower part. The spacers are attached to, or constitute, a supporting element on top of the ski, in order to make the ski stiffer in this area. The spacers are attached pivotally to the ski, and rigidly to the upper part, or opposite. The length of the spacers will set the height of the sledge.

To improve the driving characteristics it is preferred to connect a damper to the upper and lower part in the rear end. The damper is preferably mounted inclining backwards, in such a way that it is attached to the upper part closer to the front part, than to the lower part, as the damper is pulling the front end of the upper part upwards when retracting. When the front end of the upper part is pulled upwards, the front end of the ski will simultaneously be pressed downwards due to the pivotal and slidable connection between the upper part and the ski.

The carrier surface of the sledge should preferably not slant upwards or downwards to the snowmobile when the snowmobile and sledge is standing on a flat support. Further, the carrier surface should be as low as possible, to achieve low centre of gravity and good balance. In order to achieve these advantages, the coupling device to the snowmobile should be higher than the carrier surface. In cases where the carrier surface comprises a longitudinal pole, the pole may comprise a front part slanting upwards, and the front end of this may be fastened to the snowmobile.

The lower part of the chassis according to the present invention comprises one ski preferably protruding from the rear end of the chassis towards the coupling device for fastening to the snowmobile. The ski is made of a material which is not elastic but bendable at the same time as it has high wear resistance, and at the least one smooth surface. The smooth surface of the ski must be facing the ground, in order to reduce the friction. A preferred material for manufacturing such a ski is PE polyethylene, and a thickness of about 8 mm will result in a ski being bendable but not elastic.

The ski constitutes basis for both attachment devices between the lower and upper part, wherein the slidable connection is at the front part of the ski. Since the ski is made of bendable material, the front edge of the ski may be lifted from the ground while the middle and/or rear part of the ski still is in contact with the ground. This also results in that the ski is sliding more easily over roughness in landscape, and more rarely gets stuck. It also implies that if the snowmobile is driving on a wet surface, snow, ice and water being spun up by the track belt of the snowmobile, will be led under the sledge and lift the ski in such a way that the sledge will float on top of it.

The pivotal and slidable connection between the lower and upper part, in the front part of the chassis is preferably made by attaching one or more carriages pivotally to the upper- or lower part, and that these carriages slides along one or more rails on the opposite part. The carriage and rail must be adapted to each other, in such a way that the carriage runs easily along the rail, but without possibilities to unfasten. This sliding motion may also be obtained in other ways, for instance may a pin on one part run in a slit on the other part. In a preferred embodiment of the present invention, the carriages or rails are attached directly to the ski of the lower part. The ski will protect the carriage sliding along the rails and ensuring that the carriage runs easily even when driving in slushy conditions.

The ski is, as mentioned above, bendable, but in the areas for attachment to the upper part, both for the slidable connection in the front end and the spacers in the rear end, the ski will be stiffened by rails or carriages, and spacers or stiffening elements, respectively. In an alternative embodiment the ski is thus not bendable over the whole length, but only in the area between the attachments to the upper part.

The rails and carriages being used in the pivotal slidable connection preferably have square cross-section, as the inner cross-section of the carriage is a somewhat larger than the outer cross-section of the corresponding rail. In an alternative embodiment the carriage has a longitudinal slit on one side, in such a way that it only grips around the rail, and does not surround it completely. However, it is crucial that the carriage does not fall off the rail, and upon driving in tough landscape there will be great stress on this slidable connection.

With such an embodiment of the pivotal and slidable connection, the upper part may, in its simplest embodiment, comprise just a pole, pivotally attached to the lower part at one end, and slidable, pivotally attached to the upper part at the other end. In an alternative embodiment the pivotal, slidable attachment is achieved by a carriage which is pivotally attached to a front end of the lower part and grips around the pole and slides along this. The front end of the pole may be free.

The distance between the rear and front attachments between the upper and lower part, and the length of the rails for attachment between the lower and upper part will both be dependent on each other but also on the height and length of the sledge. The height and length of the upper part of the sledge will influence maximum movement of the slidable connection, as the front end of the lower part partly or completely should be able to bear against the front end of the upper part, and the rear part of the lower part partly or completely should be able to bear against the rear end of the upper part.

When a sledge having a chassis according to the present invention is suspended behind a snowmobile in tough landscape, the movements of the snowmobile will be transferred to the sledge over the coupling device. As the coupling device is on the upper part, and the upper part is attached to the lower part at two places, one pivotal and one pivotal and slidable, the chassis of the sledge will follow the landscape under the sledge nearly independent of the vertical movement of the snowmobile. A chassis according to the present invention will thus give a more damped and comfortable movement for the goods and/or persons being transported on the sledge.

In order to improve both the ability to move forward and the riding comfort, the ski is preferably broader at the front end, about the area of the attachment to the upper part, in such a way that it constitutes a screen. This part of the ski is moving according to the landscape, and will ensure that possible elevations which pass the track belt of the snowmobile will pass underneath the ski of the chassis, and not get stuck between the track belt of the snowmobile and the ski of the sledge. It will also prevent snow, water and the similar to splash the upper part of the sledge, and push the sledge to the side for larger obstacles. The snow, ice and similar being spun by the track belt of the snowmobile will also be led underneath this part of the ski, and thus make the sledge run easily.

In the present invention the chassis comprises, as said above, just one ski. This ski is centred underneath the upper part of the chassis, and thus the sledge, in such a way that it will run in the track made by the track belt of the snowmobile. The snow in the track is packed hard and thus there will be minimum resistance to pull the sledge. Further, there is an advantage that the ski is broader than regular skis for snowmobile sledges. The ski should protrude from behind the spacers attaching the upper part to the lower part, and should be basis for the pivotal, slidable attachment to the upper part, in the front end.

In order to make an embodiment having only one ski more stable, and to avoid that the sledge wobble when running, it is preferred that the underside of the ski is provided with one, preferably two longitudinal ribs, at the least in the back part. These will offer better control for instance as the ski will not slide to the side in sudden turns, but follow the snowmobile. A sledge having a chassis according to the present invention, and being provided with such a ski, may be parked independently, without a side support.

The invention will now be described with an example of a preferred embodiment of a chassis for a sledge made to be suspended behind a snowmobile. The example is meant to be illustrative only, and should not be interpreted as limiting to the invention as defined in the claims.

### Example

A preferred embodiment of the present invention is shown in the enclosed Figures, where
Figure 1 shows the chassis of a snowmobile sledge, from the side,
Figure 2 shows the chassis of Figure 1, in perspective from above,
Figure 3 shows the chassis of Figure 1, in perspective from below, and
Figure 4 shows a sledge having a cargo box, wherein the chassis of the sledge is shown in Figures 1-3.

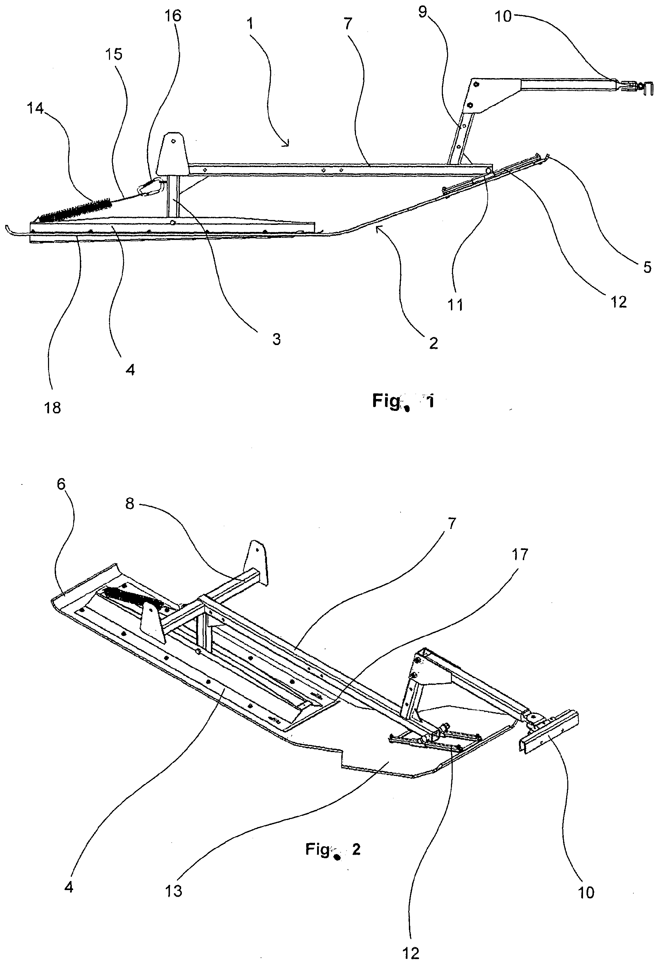

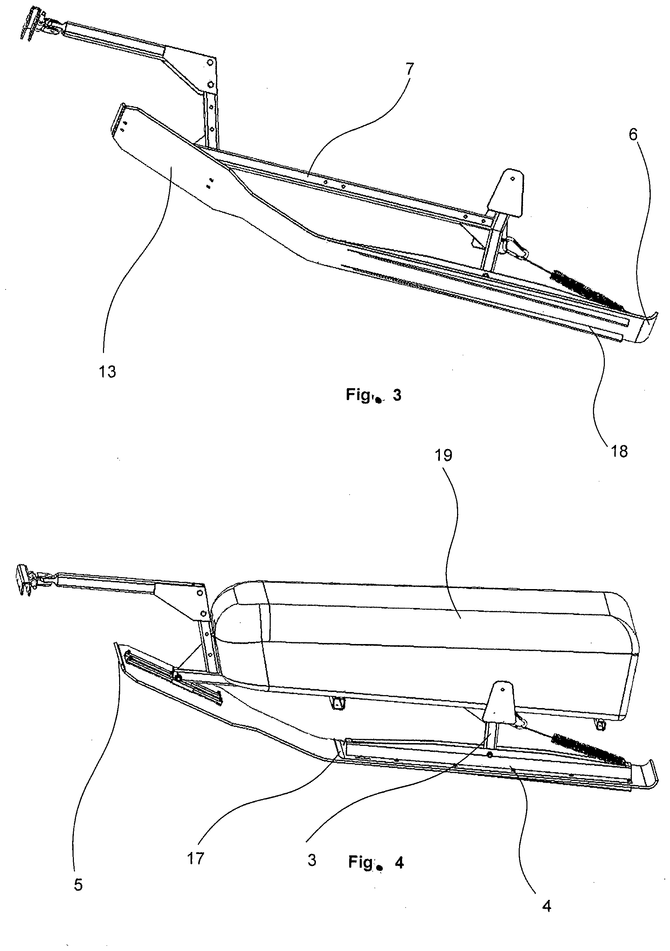

The chassis of a snowmobile sledge shown in Figures 1-3 comprises an upper part 1 and a lower part, as the upper part 1 is attached to the lower part with a spacer 3 and two stiffening elements 4 at the rear end, and with a pivotal and slideable attachment at the front end. The lower part comprises in the shown embodiment, one ski 2, where at least parts of the ski are broader than normal for skis on a snowmobile sledge, but narrower than a regular track belt of a snowmobile. The ski is arranged centrally under the upper part 1 of the chassis in such a way that the ski will follow the snowmobile track. In order to reduce friction while driving forward and backward, the ski is performed with ends 5, 6 being bent upward. The upper part 1 is designed to constitute a carrier surface, for instance if the sledge should be used as a cargo sledge as shown with a cargo box 19 in Figure 4.

In the shown embodiment, the upper part comprises a longitudinal pole 7 with a cross bar 8 at the end, but the upper part may comprise additional cross bars and/or elongations of the longitudinal pole if necessary. In the shown embodiment a second pole 9 is attached to the front end of the carrier surface, as the second pole 9 inclines upwards and forwards towards the coupling to a snowmobile. In the shown case the second pole 9 comprises two parts, as one stretches upwards and is attached to another part stretching forward. This may be solved in many ways which will be obvious to a person skilled in the art. Further, in the shown embodiment a coupling device 10 is used for preventing rotation at the coupling to the snowmobile.

The pivotal and slidable connection between the upper and lower part at the front end is shown as two carriages 11 being pivotally attached to the upper part, as the carriages grasp around and runs along two tracks 12 being attached to the front part of the ski 2. In the same area, the ski is also performed with a broader part 13, which functions as a screen and improves the ability of the sledge to move forward, protects the goods on the sledge and constitutes attachment for the rails 12.

In the rear part of the lower part two longitudinal, stiffening elements 4 are attached to the ski 2. The stiffening elements are arranged in parallel along the ski, and symmetrically about the longitudinal axis. The upper part is attached to the lower part with a spacer 3 which, in the shown embodiment, is attached rigidly to the upper part and pivotally to the stiffening elements 4 of the ski 2. This may, of course, be opposite. In the shown embodiment, the spacer 3 fits between the two stiffening elements 4, and is attached to both, in the shown embodiment with a thorough pin. In order to improve the stability of the ski 2 it is preferred that the stiffening elements 4 are connected to each other as shown in the Figures. The stiffening elements 4 and the attachment between them and the spacer 3, may incidentally be performed in many ways being obvious to a person skilled in the art.

When the sledge is pulled forward by the snowmobile, the ski 2 will bend in relation to the landscape, but in the area of the stiffening elements 4, the ski will not be bent. Thus, the stiffening elements 4 are preferably rounded in the front end 17 in such a way that the stress on the ski in this area will be reduced.

In the shown embodiment, the ski is provided with two longitudinal ribs 18 on its underside, and this will make the sledge more stable and ensures that the sledge follows the snowmobile better, especially in turns. The ribs 18 will also make the sledge more stable when standing. The ribs in the shown embodiment are as long as the stiffening elements, and their depth increases backwards.

Between the upper and lower part, behind the spacer, a damper 14 is attached. In the shown embodiment, this damper is simply made as a spring 14, fastened at the stiffening element 4 on the lower part in one end, and to the upper part 1 at the other end. The damper, or spring 14 may preferably be inclined backwards, as it is supposed to pull the front end of the upper part upwards when retracting. As the front end of the upper part is pulled upwards, the carriages 11 will slide towards the front end of the rails 12, and thereby the front end of the ski will be pressed downwards. In the preferred shown embodiment, one end of the spring 14 is fastened to a chain 15, and more preferably the chain 15 is fastened to a spring hook 16 or the similar being fastened to the upper part. In this way the damping of the sledge can be regulated very fast and easy in relation to the cargo and driving conditions.

## Claims

1. Chassis for a sledge to be suspended behind a vehicle, comprising an upper part (1) and a lower part, wherein the lower part comprises ski (2) or the similar bearing against the landscape, and the upper part comprises a coupling for a vehicle, as the upper part (1) and lower part are pivotally attached to each other at the middle or back part, and via a pivotal and slidable connection (11, 12) at the front part, **characterized in that** the lower part comprises only one ski (2) which is arranged laterally centred under the upper part (1), and wherein at least parts of the ski (2) are made of a bendable material, and wherein a front part (13) of the ski (2), about the attachment to the upper part, is wider and shaped in such a way that it constitutes a screen (13).

2. Chassis according to claim 1, **characterized in that** the ski (2) is provided with at the least one, preferably two longitudinal ribs (18) on its underside.

3. Chassis according to claim 1 or 2, **characterized in that** one part of the pivotal and slidable connection (11) between the upper and lower part, is attached to the wider front part of the ski (2).

4. Chassis according to claim 3, **characterized in that** the pivotal and slidable connection comprises at least one rail (12) attached to the front part of the ski, and at least one carriage (11) attached to the upper part, wherein the carriage (11) slides along the rail (12).

5. Chassis according to any one of the proceeding claims, **characterized in that** at least one longitudinal, stiffening element (4) is attached to an upper side of the ski.

6. Chassis according to claim 5, **characterized in that** the upper part is pivotally attached to the lower part via a spacer (3) being attached to the stiffening element (4).

7. Chassis according to claim 6, **characterized in that** the spacer (3) is pivotally attached to the stiffening element (4).

8. Chassis according to claim 5, **characterized in that** two stiffening elements (4) are attached to the upper side of the ski, wherein the stiffening elements are attached laterally parallel.

9. Chassis according to any one of the preceding claims, **characterized in that** a damper (14) is attached between the upper part (1) and the lower part.

10. Chassis according to claim 9, **characterized in that** the damper (14) is adjustable.

11. Chassis according to claim 1, **characterized in that** the coupling device (10) to a vehicle is higher than the carrier surface (7) on the upper part (1).

## Patentansprüche

1. Fahrgestell für einen Schlitten, der hinter einem Fahrzeug angehängt werden kann, mit einem oberen Abschnitt (1) und einem unteren Abschnitt, wobei der untere Abschnitt Skis (2) oder dergleichen aufweist, die sich auf die Landschaft stützen, und wobei der obere Abschnitt eine Kupplung für ein Fahrzeug aufweist, wenn der obere Abschnitt (1) und der untere Abschnitt drehbar miteinander am mittleren Abschnitt oder am hinteren Abschnitt und mit einer drehbaren und verschiebbaren Verbindung (11, 12) miteinander an dem vorderen Abschnitt verbunden sind,
**dadurch gekennzeichnet, dass**
der untere Abschnitt nur einen Ski (2) aufweist, der seitlich mittig unter dem oberen Abschnitt (1) angeordnet ist, und wobei mindestens Teile des Ski (2) aus einem biegsamen Material sind, und wobei ein Vorderteil (13) des Skis (2) um die Anbringung an dem oberen Abschnitt breiter und derart gestaltet ist, dass es eine Abschirmung (13) bildet.

2. Fahrgestell nach Anspruch 1, **dadurch gekennzeichnet, dass** der Ski (2) mit mindestens einer, vorzugsweise zwei längslaufenden Rippen (18) auf seiner Unterseite versehen ist.

3. Fahrgestell nach Anspruch 1 oder 2 **dadurch gekennzeichnet, dass** ein Teil der drehbaren und verschiebbaren Verbindung (11) zwischen dem oberen und unteren Abschnitt mit dem breiteren Vorderteil des Skis (2) verbunden ist.

4. Fahrgestell nach Anspruch 3, **dadurch gekennzeichnet, dass** die drehbare und verschiebbare Verbindung mindestens eine Schiene (12), die mit dem Vorderteil des Skis verbunden ist, und mindestens einen Schlitten (11) aufweist, der mit dem oberen Abschnitt verbunden ist, wenn der Schlitten (11) entlang der Schiene (12) gleitet.

5. Fahrgestell nach einem der vorherigen Ansprüche, **dadurch gekennzeichnet, dass** mindestens ein seitliches Versteifungselement (4) auf einer Oberseite des Ski angebracht ist.

6. Fahrgestell nach Anspruch 5, **dadurch gekennzeichnet, dass** der obere Abschnitt drehbar mittels eines Distanzstücks (3), das mit dem Versteifungselement (4) verbunden ist, an dem unteren Abschnitt befestigt ist.

7. Fahrgestell nach Anspruch 6 **dadurch gekennzeichnet, dass** das Distanzstück (3) drehbar an dem Versteifungselement (4) befestigt ist.

8. Fahrgestell nach Anspruch 5 **dadurch gekennzeichnet, dass** zwei Versteifungselemente (4) an der Oberseite des Skis befestigt sind, wobei die Versteifungselemente seitlich parallel angeordnet sind.

9. Fahrgestell nach einem der vorherigen Ansprüche, **dadurch gekennzeichnet, dass** ein Dämpfungselement (14) zwischen dem oberen Abschnitt (1) und dem unteren Abschnitt angeordnet ist.

10. Fahrgestell nach Anspruch 9, **dadurch gekennzeichnet, dass** das Dämpfungselement (14) einstellbar ist.

11. Fahrgestell nach Anspruch 1 **dadurch gekennzeichnet, dass** die Kupplungsvorrichtung (10) für ein Fahrzeug höher ist als die Trägerfläche (7) an dem oberen Abschnitt (1).

## Revendications

1. Châssis pour traineau destiné à être suspendu derrière un véhicule, comprenant une partie supérieure (1) et une partie inférieure, où la partie inférieure comprend un ski (2) ou un appui similaire contre le terrain et la partie supérieure comprend un couplage pour un véhicule, la partie supérieure (1) et la partie inférieure étant reliées l'une à l'autre de manière pivotante au niveau d'une partie médiane ou arrière, et par l'intermédiaire d'une connexion pivotante et coulissante (11, 12) au niveau de la partie avant, **caractérisé en ce que** la partie inférieure comprend un seul ski (2) qui est disposé centré latéralement sous la partie supérieure (1), et où au moins des parties du ski (2) sont faites d'un matériau pliable et où une partie avant (13) du ski (2), autour de la fixation de la partie supérieure, est plus large et formée de telle manière qu'elle constitue une protection (13).

2. Châssis pour traineau selon la revendication 1, **caractérisé en ce que** le ski (2) est prévu avec au moins une, de préférence deux armatures longitudinales (18) sur sa face inférieure.

3. Châssis selon la revendication 1 ou 2, **caractérisé en ce qu'**une partie de la connexion pivotante et coulissante (11) entre la partie supérieure et la partie inférieure, est fixée à la partie avant plus large du ski (2).

4. Châssis selon la revendication 3, **caractérisé en ce que** la connexion pivotante et coulissante comprend au moins un rail (12) fixé à la partie avant du ski, et au moins un plateau (11) fixé à la partie supérieure, où le plateau (11) coulisse le long du rail (12).

5. Châssis selon l'une quelconque des revendications précédentes, **caractérisé en ce qu'**au moins un élément longitudinal de rigidification (4) est fixé à une face supérieure du ski.

6. Châssis selon la revendication 5, **caractérisé en ce que** la partie supérieure est fixée de manière pivotante à la partie inférieure via une entretoise (3) fixée à l'élément de rigidification (4).

7. Châssis selon la revendication 6, **caractérisé en ce que** l'entretoise (3) est fixée de manière pivotante à l'élément de rigidification (4).

8. Châssis selon la revendication 5, **caractérisé en ce que** deux éléments de rigidification (4) sont fixés à la face supérieure du ski, où les éléments de rigidification sont fixés parallèles latéralement.

9. Châssis selon l'une quelconque des revendications précédentes, **caractérisé en ce qu'**un amortisseur (14) est fixé entre la partie supérieure (1) et la partie inférieure.

10. Châssis selon la revendication 9, **caractérisé en ce que** l'amortisseur (14) est ajustable.

11. Châssis selon la revendication 14, **caractérisé en ce que** le dispositif de couplage (10) à un véhicule est plus élevé que la surface du plateau (7) sur la partie supérieure (1).
